# EUROPÄISCHE PATENTANMELDUNG

(11) **EP 2 524 863 A1**
(43) Veröffentlichungstag der Anmeldung: **21.11.2012**
(21) Anmeldenummer: 11004189.4
(22) Anmeldetag: 20.05.2011
(51) Int. Cl.: B63B 21/00, B63B 49/00, G01C 13/00

(54) **Unbemanntes Boot mit Tiefenmesser als Ankerhilfe**

(71) Anmelder: Bauer, Alfred, 84424 Mittbach (DE)
(72) Erfinder: Bauer, Alfred, 84424 Mittbach (DE)

(57) **Zusammenfassung**

Mittels eines ferngesteuerten oder frei fahrenden unbemannten Boots, das vom Mutterschiff ausgesetzt wird, wird nach einem geeigneten Ankergrund gesucht. Das unbemannte Boot sendet die Wassertiefe und GPS-Daten zum Mutterschiff. Der Kapitän wählt mit diesen Tiefendaten und den Positionsdaten einen geeigneten Ankerplatz aus. Das unbemannte Boot ist kleiner als das Mutterschiff, es kann z.B. ein ferngesteuertes Modellboot sein. Wegen des geringeren Tiefgangs des unbemannten Boots besteht keine Gefahr auf Grund zu laufen, wie das bei dem Mutterschiff der Fall wäre, wenn es den Ankergrund abfahren würde um die Wassertiefe zu messen.

## Beschreibung

Zum Ankern mit einem Schiff ist die Wassertiefe einer der wichtigsten Parameter, die zu beachten sind. Desto geringer die Tiefe, bei gleich bleibender Beschaffenheit des Ankergrunds, umso besser hält der Anker. Es sollte bei möglichst geringer Tiefe geankert werden, aber es muss noch genügend Tiefe vorhanden sein, um nicht auf Grund zu laufen. Mit der nachfolgenden Entwicklung ist es möglich, mit wenig Aufwand den optimalen Ankergrund zu erkunden.

### Stand der Technik bisherige Praxis

Meistens tastet man sich mittels eines am Schiff angebrachten Tiefenmessers mit langsamer Vorwärtsfahrt an den Ankergrund heran. Einen Ankergrund vom Schiff aus abzutasten ist immer ein Nervenkitzel, da man die Wassertiefe nicht weit genug nach vorn sicht. Man wagt sich nicht weit genug ans Ufer wegen der Unsicherheit auf eine Untiefe zu treffen.

Es muss auch die Wassertiefe seitlich des Schiffes bekannt sein, denn wenn der Anker Fällt dreht sich das Schiff wegen des Windes im Radius der Schiffslänge plus Länge Ankerkette um den Anker.

Es gibt vorausschauende Echolote, aber diese können bei geringer Wassertiefe nicht weit genug vorausschauen.

Manchmal tastet ein kleines bemanntes Beiboot den Ankergrund mittels eines am Beiboot angebrachten Tiefenmessers oder Handecholots ab, um einen geeigneten Ankerplatz für das Mutterschiff zu finden.

### Mängel der bisherigen Verfahren

Das Aussetzen eines Beiboots ist auf kleineren Schiffen meistens mit erheblichem Aufwand verbunden, denn bei größeren Schiffen muss das Boot mittels eines Krans ins Wasser gelassen werden.

Das Abtasten des Ankergrunds von Schiff aus birgt das Risiko, wegen einer Untiefe auf Grund zu laufen. Auch kann der Ankergrund im Bereich des Schwojkreises nicht genau erkundet werden.

Die Vorausecholote können wegen des Abtastwinkels bei geringer Wassertiefe nicht weit genug voraus schauen. Seitlich des Schiffes wird die Wassertiefe überhaupt nicht oder nur wenig abgetastet.

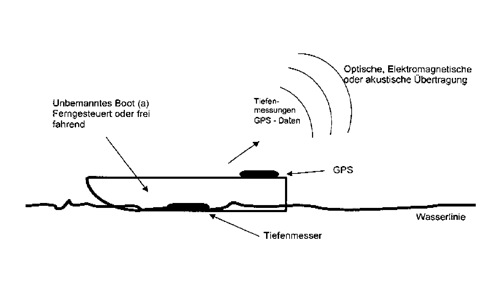

## Patentansprüche

**1.** Unbemanntes, ferngesteuertes oder frei fahrendes Boot (a) mit Tiefenmesser zur Erkundung eines geeigneten Ankergrunds.

**3.** Übermittlung der Wassertiefe von (a) und Übertragung der Daten über ein optisches, akustisches oder elektromagnetisches Signal zum Schiff.

**4.** Übermittlung der GPS Positionsdaten des an (a) angebrachten GPS Empfängers.

**5.** Verarbeitung der Tiefenwerte mit den GPS Daten als Tiefenkarte
